# EUROPEAN PATENT APPLICATION

(11) **EP 1 550 548 A1**
(43) Date of publication of application: **06.07.2005**
(21) Application number: 02807899.6
(22) Date of filing: 02.10.2002
(51) Int. Cl.: B30B 5/02, B32B 31/20, H01L 31/042

(54) **LAMINATING SYSTEM**

(71) Applicant: NPC Incorporated, Arakawa-ku, Toyko 116-0003 (JP); JSR Trading Co., Ltd., Tokyo 104-0045 (JP)
(72) Inventor: CHIKAKI, Yoshiro, NPC INCORPORATED, Arakawa-ku, Tokyo 116-0003 (JP); TOMIZAWA, Manabu, c/o JSR TRADING, CO., LTD, Chuo-ku, Tokyo 104-0045 (JP)
(74) Representative: Turi, Michael, Dipl.-Phys.
(86) International application number: PCT/JP2002/010287
(87) International publication number: WO 2004/030900

(57) **Abstract**

A laminating apparatus for laminating an object to be laminated includes an upper chamber and a lower chamber which are partitioned by a diaphragm, a heater board provided in the lower chamber, and a diaphragm capable of freely expanding for pressurizing the object to be laminated mounted on the heater board, in which the diaphragm is constituted of butyl rubber. The composition of the butyl rubber includes, for example, 100 to 0 parts by weight of halogenated butyl, 0 to 100 parts by weight of regular butyl, 1 to 5 parts by weight of magnesium oxide, 5 to 100 parts by weight of carbon black, 0 to 20 parts by weight of paraffin oil, 1 to 5 parts by weight of zinc oxide, 1 to 20 parts by weight of resin vulcanizing agent, and 0 to 10 parts by weight of processing aid. According to the present invention, the lifetime of the diaphragm is extended, and laminated objects can be produced at a low cost.

## Description

### Technical Field

The present invention relates to a laminating apparatus for producing a laminated object such as a solar battery panel.

### Background Art

Conventionally, as a laminating apparatus for producing a solar battery panel, a laminating apparatus of so-called double vacuum system is publicly known, which has an upper chamber and a lower chamber partitioned by a diaphragm. Regarding such a laminating apparatus of double vacuum system, there are disclosed Japanese Patent Publication No. Hei 4-65556 "Solar Battery Module Laminating Apparatus" and Japanese Patent Publication No. Hei 6-52801 "Method of Producing Solar Battery Panel."

In this laminating apparatus of double vacuum system, a diaphragm is pressurized downward in a state that an object to be laminated mounted on a heater board is heated, thereby pressurizing the object to be laminated from top and bottom between the heater board and the diaphragm. In a conventional laminating apparatus, a silicon resin film is generally used as the diaphragm for pressurizing the object to be laminated.

However, the diaphragm constituted of conventional silicon resin film has a problem of having low heat resistance property and poor elastic performance. For example, when laminating a solar battery panel, the diaphragm is heated to a temperature of approximately 180°C, but in such a case, the diaphragm constituted of silicon resin would get damaged after performing about 3000 times of laminating processes. For example, when performing about 300 times of laminating processes in a day, the diaphragm constituted of silicon resin has a lifetime of only about ten days.

Further, the diaphragm constituted of silicon resin is expensive, and thus frequent replacement of which causes a cost related problem.

### Disclosure of the Invention

Therefore, an object of the present invention is to obtain a laminating apparatus having a diaphragm with a long lifetime.

In order to achieve this object, the present invention provides a laminating apparatus for laminating an object to be laminated, which includes an upper chamber and a lower chamber which are partitioned by a diaphragm, a heater board provided in the lower chamber, and a diaphragm capable of freely expanding for pressurizing the object to be laminated mounted on the heater board, in which the diaphragm is constituted of butyl rubber.

Preferably, the composition of the butyl rubber includes 100 to 0 parts by weight of halogenated butyl, 0 to 100 parts by weight of regular butyl, 1 to 5 parts by weight of magnesium oxide, 5 to 100 parts by weight of carbon black, 0 to 20 parts by weight of paraffin oil, 1 to 5 parts by weight of zinc oxide, 1 to 20 parts by weight of resin vulcanizing agent, and 0 to 10 parts by weight of processing aid.

There may be included a holding means for holding the object to be laminated mounted on the heater board in a state that the object to be laminated is separated upward from an upper surface of the heater board while the object to be laminated is carried in.

The holding means may be configured to hold the object to be laminated in a state that the object to be laminated is separated upward from the upper surface of the heater board also while the object to be laminated is carried out.

The object to be laminated is a solar battery panel for example.

### Brief Description of Drawings

FIG. 1 is a plan view of a laminating apparatus according to an example of the present invention;
FIG. 2 is a front view of the laminating apparatus;
FIG. 3 is a view showing an A-A cross section in FIG. 2 of a main part of the laminating apparatus on an enlarged scale;
FIG. 4 is an explanatory view of a state that an object to be laminated is inserted into the laminating apparatus;
FIG. 5 is an explanatory view of a state that the inside of an upper and lower chambers of the laminating apparatus is evacuated;
FIG. 6 is an explanatory view of a state that the object to be laminated is heated, sandwiched and pressurized; and
FIG. 7 is an explanatory view of a state that a produced laminated object is removed from the laminating apparatus.

### Best Mode for Carrying out the Invention

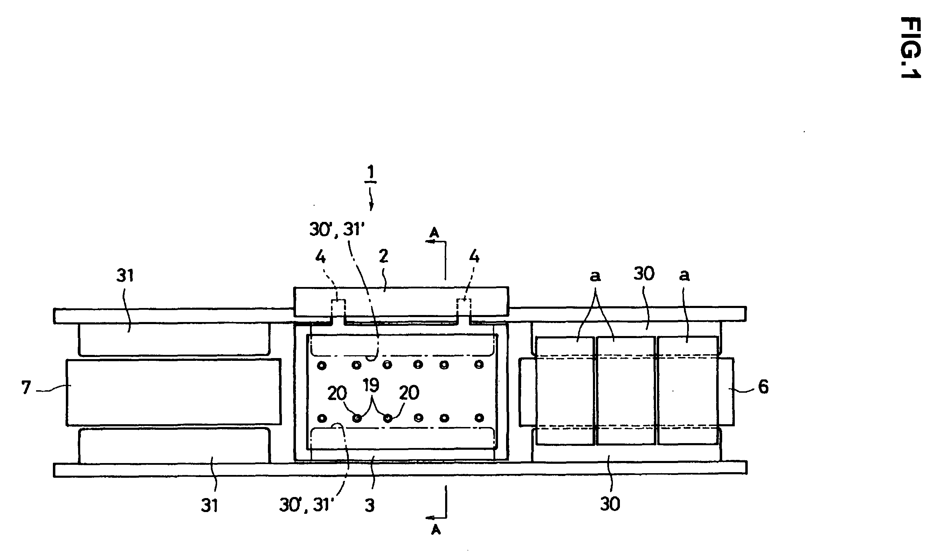

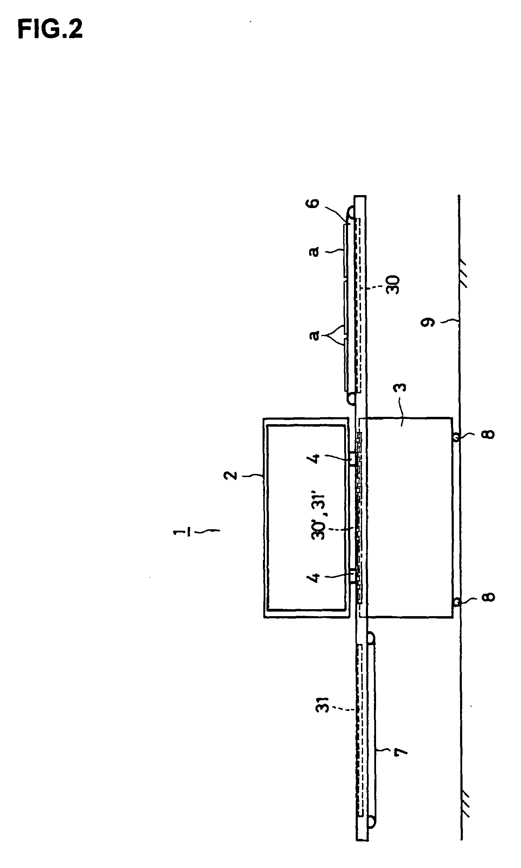

Hereinafter, a preferred embodiment of the present invention will be described based on the drawings. FIG. 1 is a front view of a laminating apparatus 1 according to an example of the present invention, and FIG. 2 is a plan view of the laminating apparatus 1. The laminating apparatus 1 shown in the views has an upper case 2 and a lower case 3. These upper case 2 and lower case 3 are joined together via a hinge part 4 arranged on the rear side thereof, and the upper case 2 is pivoted upward about the hinge part 4 so as to open the laminating apparatus 1. Although not being shown, an air cylinder or the like to lift the upper case 2 for facilitating opening may be provided.

On the left and right sides of the lower case 3, a loader conveyor 6 for mounting a solar battery panel a as an object to be laminated before being laminated by the laminating apparatus 1 and an unloader conveyor 7 for mounting a solar battery panel a after being laminated by the laminating apparatus 1 are arranged respectively. These loader conveyor 6 and unloader conveyor 7 are both configured to be raised and lowered. FIG. 1 shows the loader conveyor 6 in a raised state and the unloader conveyor 7 in a lowered state.

Further, on the both sides of the loader conveyor 6 and the unloader conveyor 7, traversers 30, 31 are arranged respectively for supporting sides of the solar battery panel a when these loader conveyor 6 and under conveyor 7 are lowered. The height of top surfaces of these traversers 30, 31 is set to a position lower than top surfaces of the loader conveyor 6 and the unloader conveyor 7 when these are raised, and to a position higher than the top surfaces of the loader conveyor 6 and the unloader conveyor 7 when these are lowered. The traverser 30 is configured to reciprocate between a position shown by solid lines 30 and a position shown by chain lines 30' in FIG. 1 and FIG. 2. Similarly, the traverser 31 is configured to reciprocate between a position shown by solid lines 31 and a position shown by chain lines 31' in FIG. 1 and FIG. 2 (the positions shown by the chain lines 30' and the chain lines 31' are the same).

As will be described later, when the loader conveyor 6 is lowered so that the solar battery panel a is passed to the traverser 30, the traverser 30 moves leftward to carry the solar battery panel a in a position between the upper case 2 and the lower case 3. Further, after receiving the solar battery panel a in the position between the upper case 2 and the lower case 3, the traverser 31 moves leftward to carry the solar battery panel a out to a position for passing the solar battery panel a to the unloader conveyor 7.

Further, casters 8 are attached to an under surface of the lower case 3, and the casters 8 are rolled to allow movement of the laminating apparatus 1 on a floor surface 9 with a small force.

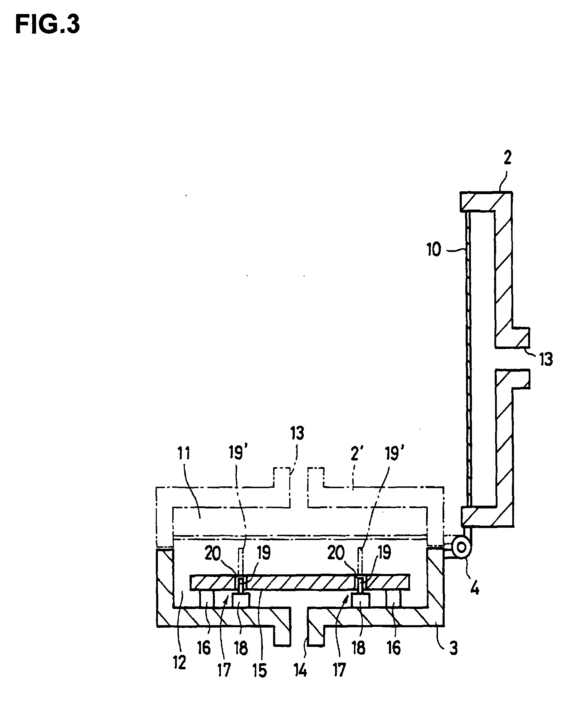

FIG. 3 is a view showing an A-A cross section in FIG. 2 of a main part of the laminating apparatus 1 on an enlarged scale. As shown in FIG. 3, a diaphragm 10 is fitted inside the upper case 2. This diaphragm 10 is constituted of butyl rubber. The composition of the butyl rubber used for the diaphragm 10 includes 100 to 0 parts by weight of halogenated butyl, 0 to 100 parts by weight of regular butyl, 1 to 5 parts by weight of magnesium oxide, 5 to 100 parts by weight of carbon black, 0 to 20 parts by weight of paraffin oil, 1 to 5 parts by weight of zinc oxide, 1 to 20 parts by weight of resin vulcanizing agent, and 0 to 10 parts by weight of processing aid.

As shown by chain lines 2' in FIG. 3, in a state that the upper case 2 is pivoted downward about the hinge part 4 so that the upper case 2 and the lower case 3 are closed, an upper chamber 11 and a lower chamber 12, which are partitioned into an upper side and a lower side by the diaphragm 10, are formed inside the laminating apparatus 1. On a top surface of the upper case 2 and an under surface of the lower case 3, inlet/outlet ports 13, 14 are provided. In a state that the upper case 2 and the lower case 3 are closed as shown by the chain lines 2' in FIG. 3, the inside of the upper chamber 11 and the inside of the lower chamber 12 can be evacuated via the inlet/outlet ports 13, 14 respectively, and also atmospheric pressure can be introduced into the upper chamber 11 and the lower chamber 12 via the inlet/outlet ports 13, 14 respectively.

A heater board 15 is provided inside the lower case 3. This heater board 15 is fixed at a certain height by support posts 16 formed to project on a bottom surface of the lower case 3, and the height of a top surface of the heater board 15 is set to a position lower than the height of the top surfaces of the previously described traversers 30, 31. The heater board 15 is constituted of, for example, a sheathed heater made of aluminum, and in addition, the heater board 15 may have a water cooling pipe or the like for performing accurate temperature control.

Further, on the bottom surface of the lower case 3, there are arranged holding means 17 capable of holding the solar battery panel a in a state that the solar battery panel a is raised upward from the surface of the heater board 15. In this embodiment, the holding means 17 are each constituted of a raising/lowering mechanism 18 and a support pin 19. As the raising/lowering mechanism 18, a publicly known raising/lowering means, for example, an air cylinder, a ball nut, a rack and pinion, or the like, can be appropriately used, and by the operation of the raising/lowering mechanism 18, the support pin 19 can be raised and lowered.

Through holes 20 are formed in the heater board 15, and the support pins 19 which are raised and lowered by the operation of the raising/lowering mechanisms 18 are arranged to penetrate these through holes 20. When the support pins 19 are raised by the operation of the raising/lowering mechanisms 18, as shown by chain lines 19' in FIG. 3, upper ends of the support pins 19 project upward and higher than the upper surface of the heater board 15 via the through holes 20. Further, the height of the upper ends of the support pins 19 thus raised is set to a position higher than the height of the upper surfaces of the previously described traversers 30, 31. On the other hand, when the support pins 19 are lowered by the operation of the raising/lowering mechanisms 18, the upper ends of the support pins 19 are lowered to approximately the same height as the upper surface of the heater board 15, as shown by solid lines 19 in FIG. 3.

The solar battery panel a as an example of a laminated object produced by the laminating apparatus 1 of the present invention has a structure such that strings are sandwiched with a filler between a reinforcing material and a cover glass. As the reinforcing material, for example, PE resin or the like are used. As the filler, for example, EVA (ethylene-vinyl acetate) resin or the like is used. The strings has a structure such that solar battery cells are connected between electrodes via lead wires.

Next, the operation of the laminating apparatus 1 according to the embodiment of the present invention will be described with the case of producing the solar battery panel a for example. When inserting the solar battery panel a into the laminating apparatus 1, as shown in FIG. 1 and FIG. 2, the upper case 2 is pivoted upward about the hinge part 4 from the lower case 3 so that the upper chamber 11 is in an open state, and the support pins 19 are in a state being lowered in advance by the operation of the raising/lowering mechanisms 18. Further, as shown in FIG. 1 and FIG. 2, the loader conveyor 6 is in a raised state, and on the top surface thereof, the solar battery panels a as objects to be laminated are mounted. The unloader conveyor 7 is in a lowered state. Further, the traversers 30, 31 are in a standby state at positions on the both sides of the loader conveyor 6 and the unloader conveyor 7 respectively.

In such a state, first, the loader conveyor 6 is lowered. Accordingly, the solar battery panels a, which have been mounted on the top surface of the loader conveyor 6 up to this point, are now in a state being supported by the traverser 30. Then, the traverser 30 moves to the position shown by the chain lines 30' in FIG. 1 and FIG. 2 so as to carry the solar battery panels a in the position between the upper case 2 and the lower case 3. Incidentally, after the solar battery panels a are carried in, the loader conveyor 6 is raised again, and onto the top surface thereof, next solar battery panels a will be carried in.

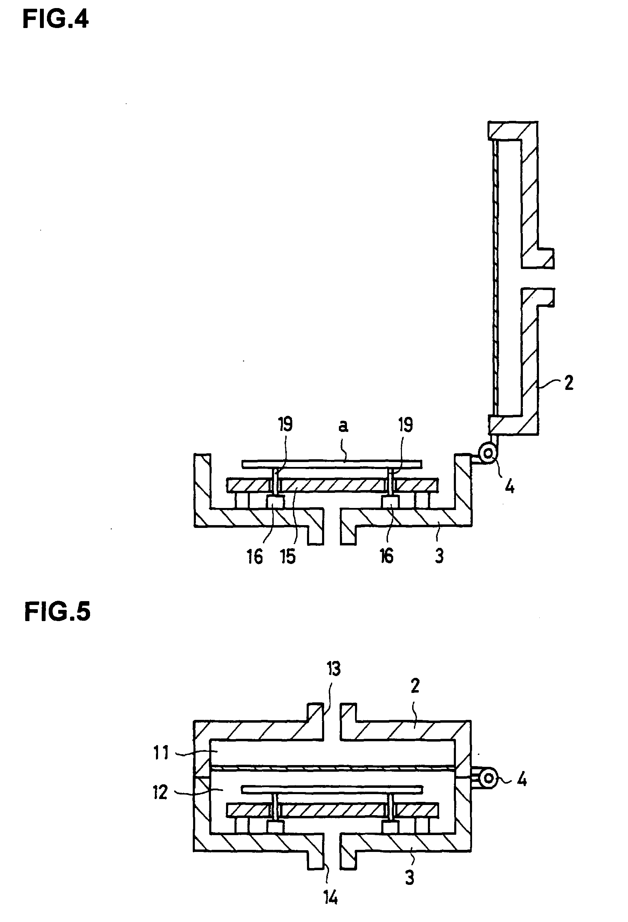

Next, the support pins 19 are raised by the operation of the raising/lowering mechanisms 18. Thus, as shown in FIG. 4, the solar battery panels a are mounted on the upper ends of the support pins 19 projected upward and higher than the top surface of the heater board 15. Note that in this state, as shown in the view, the solar battery panels a are not in contact with the top surface of the heater board 15. The traverser 30 which passed the solar battery panels a then moves to return again to the position of both sides of the loader conveyor 6.

Next, as shown in FIG. 5, the upper case 2 is pivoted downward about the hinge part 4 so as to cover the lower case 3 to thereby tightly close the laminating apparatus 1. The inside of the upper chamber 11 and the inside of the lower chamber 12 are then evacuated simultaneously via the inlet/outlet ports 13, 14.

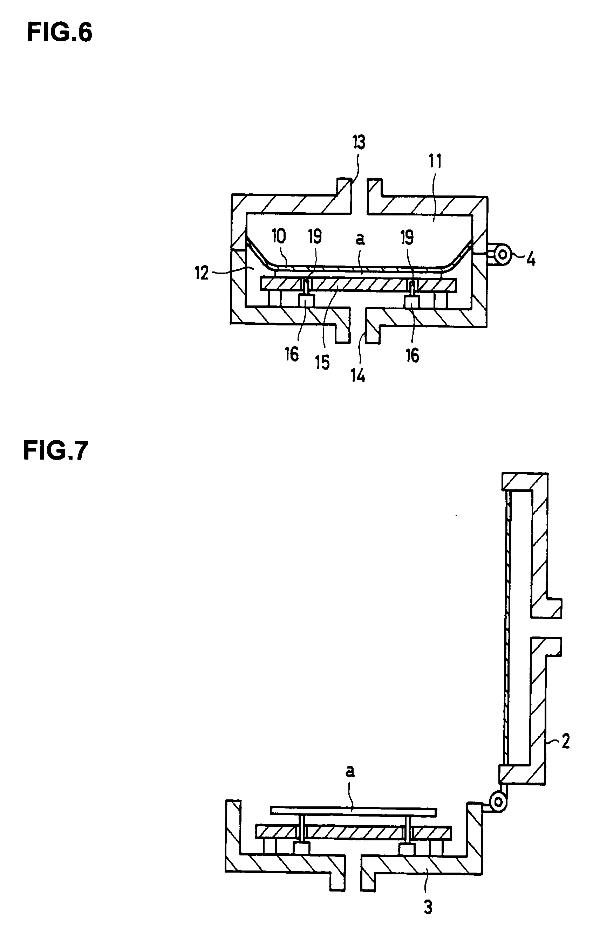

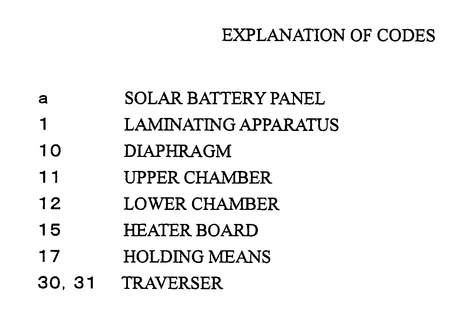

Subsequently, after the inside of the upper chamber 11 and the inside of the lower the chamber 12 are evacuated to, for example, 0.7 to 1.0 Torr, the support pins 19 are lowered by the operation of the raising/lowering mechanisms 18, as shown in FIG. 6. Thus, the solar battery panels a supported by the upper ends of the support pins 19 come in direct contact with the upper surface of the heater board 15, so that the solar battery panels a are heated. This heating facilitates chemical reaction of the EVA resin as fillers 23, 24 inside the solar battery panels a under a condition of vacuum state, and thus cross linkage takes place therein. Then, in this state, the atmospheric pressure is introduced into the upper chamber 11 via the inlet/outlet port 13 to expand the diaphragm 10 downward, thereby sandwiching and pressurizing the solar battery panels a between the upper surface of the heater board 15 and the diaphragm 10.

In this manner, after the laminating process by means of heating and pressurizing is completed and the solar battery panels a are produced, the atmospheric pressure is introduced into the lower chamber 12 via the inlet/outlet port 14. Further, the support pins 19 are raised by the operation of the raising/lowering mechanisms 18 to lift the solar battery panels a higher than the upper surface of the heater board 15. Thereafter, as shown in FIG. 7, the upper case 2 is pivoted upward about the hinge part 4 from the lower case 3, so that the laminating apparatus 1 becomes an open state. Incidentally, lifting of this upper case 2 can be performed with a not-shown air cylinder or the like.

Next, the traverser 31 moves to the position shown by the chain lines 31' in FIG. 1 and FIG. 2 and enters the space under the solar battery panels a, which are lifted by the support pins 19. Thereafter, the support pins 19 are lowered by the operation of the raising/lowering mechanisms 18. Accordingly, the solar battery panels a supported by the upper ends of the support pins 19 are now in a state being supported by the traverser 31.

Next, the traverser 31 moves to return again to the position of both sides of the unloader conveyor 7 so as to remove the solar battery panels a from the position between the upper case 2 and the lower case 3. Thereafter, the unloader conveyor 7 is raised to receive the solar battery panels a on its upper surface, and appropriately carries them out. After the carrying out is completed, the unloader conveyor 7 is lowered again.

By repeating the above steps, it becomes possibly to continuously obtain the solar battery panels a in good condition, which have no bubbles inside. According to this laminating apparatus 1, the diaphragm 10 is constituted of butyl rubber, so that the lifetime of the diaphragm 10 becomes longer as compared with the case of using a diaphragm constituted of silicon resin, thereby reducing the labor of replacement. Further, laminated objects can be provided at a low cost. Especially, when producing the solar battery panel a, peroxide is generated from the EVA as a filler during lamination, but the butyl rubber barely react with the peroxide and hardly deteriorates. On the contrary, the silicon resin reacts with the peroxide and hardens, and is easy to break.

In the foregoing, an example of the preferred embodiment of the present invention has been shown, but the present invention is not limited to the embodiment that is described here. For example, in the above embodiment, description has been given with respect to the solar battery panel a as an example of an object to be laminated, but the laminating apparatus of the present invention can perform laminating processes on various other objects. Especially, the laminating apparatus of the present invention can correspond to variation of thickness of an object to be laminated, and also can be used for producing integrated modules or the like, in which an outer wall material or a roofing material as a building material and a solar battery panel are integrated, which are gaining attention recently. Furthermore, the laminating apparatus of the present invention is not limited to the solar battery panel, which can be used for producing shatterproof glasses, ornament glasses, plywood, and the like.

### Example

Hereinafter, an example of the present invention will be described.

Solar battery panels were laminated using the laminating apparatus described in FIG. 1 to FIG. 7. The composition of butyl rubber constituting the diaphragm includes 100 to 0 parts by weight of halogenated butyl, 0 to 100 parts by weight of regular butyl, 1 to 5 parts by weight of magnesium oxide, 5 to 100 parts by weight of carbon black, 0 to 20 parts by weight of paraffin oil, 1 to 5 parts by weight of zinc oxide, 1 to 20 parts by weight of resin vulcanizing agent, and 0 to 10 parts by weight of processing aid. The diaphragm constituted of this butyl rubber was obtained at approximately the same price as a conventionally used diaphragm constituted of silicon resin.

The diaphragm constituted of butyl rubber did not harden even after repeating the lamination and became hard to break, and the diaphragm constituted of this butyl rubber endured approximately 6000 times of laminating processes and was capable of performing 300 times of laminating processes in a day for 20 days or more. As compared with the case of using the conventional diaphragm constituted of silicon resin, lifetime thereof became double or longer.

### Industrial Availability

According to the present invention, a laminating apparatus having a diaphragm with a long lifetime can be provided. Further, laminated objects can be produced at a low cost.

## Claims

1. A laminating apparatus for laminating an object to be laminated, comprising:
an upper chamber and a lower chamber which are partitioned by a diaphragm;
a heater board provided in said lower chamber; and
a diaphragm capable of freely expanding for pressurizing the object to be laminated mounted on said heater board,
wherein said diaphragm is constituted of butyl rubber.

2. The laminating apparatus according to claim 1,
wherein the composition of said butyl rubber comprises 100 to 0 parts by weight of halogenated butyl, 0 to 100 parts by weight of regular butyl, 1 to 5 parts by weight of magnesium oxide, 5 to 100 parts by weight of carbon black, 0 to 20 parts by weight of paraffin oil, 1 to 5 parts by weight of zinc oxide, 1 to 20 parts by weight of resin vulcanizing agent, and 0 to 10 parts by weight of processing aid.

3. The laminating apparatus according to claim 1, further comprising:
a holding means for holding the object to be laminated mounted on said heater board in a state that the object to be laminated is separated upward from an upper surface of said heater board while the object to be laminated is carried in.

4. The laminating apparatus according to claim 3,
wherein said holding means is configured to hold the object to be laminated in a state that the object to be laminated is separated upward from the upper surface of said heater board also while the object to be laminated is carried out.

5. The laminating apparatus according to claim 1,
wherein the object to be laminated is a solar battery panel.
